# FASCICULE DE BREVET EUROPEEN

(11) **EP 3 063 050 B1**
(45) Date de publication et mention de la délivrance du brevet: **04.04.2018**
(21) Numéro de dépôt: 14805996.7
(22) Date de dépôt: 30.10.2014
(51) Int. Cl.: B62D 5/04

(54) **UNITÉ DE PILOTAGE D'UN MOTEUR DE DIRECTION ASSISTÉE**
SERVOMOTORSTEUERUNGSEINHEIT
POWER-STEERING MOTOR CONTROL UNIT

(30) Priorité: 31.10.2013 FR 1360669
(43) Date de publication de la demande: 07.09.2016
(73) Titulaire: Valeo Systèmes De Contrôle Moteur, 95800 Cergy Saint Christophe (FR)
(72) Inventeur: PLAIDEAU, Michel, F-95590 Presles (FR)
(74) Mandataire: Novembre, Christophe Adelphe
(86) Numéro de dépôt international: PCT/FR2014/052766
(87) Numéro de publication internationale: WO 2015/063425

(56) Documents cités:
- EP-A2- 1 767 435
- DE-A1- 10 235 162
- US-A1- 2010 045 257

## Description

L'invention se rapporte à une unité de pilotage d'un moteur de direction assistée d'un véhicule automobile.

De plus en plus de véhicules automobiles sont équipés d'un dispositif de direction assistée électrique ou hydraulique. Les dispositifs de direction assistée utilisent un moteur pour aider le conducteur à orienter les roues du véhicule.

Le moteur du dispositif de direction assistée est généralement contrôlé par des relais électriques. Ces relais électriques sont pilotés par une unité de pilotage.

Le document EP 1 767 435 décrit une unité de pilotage selon l'art antérieur.

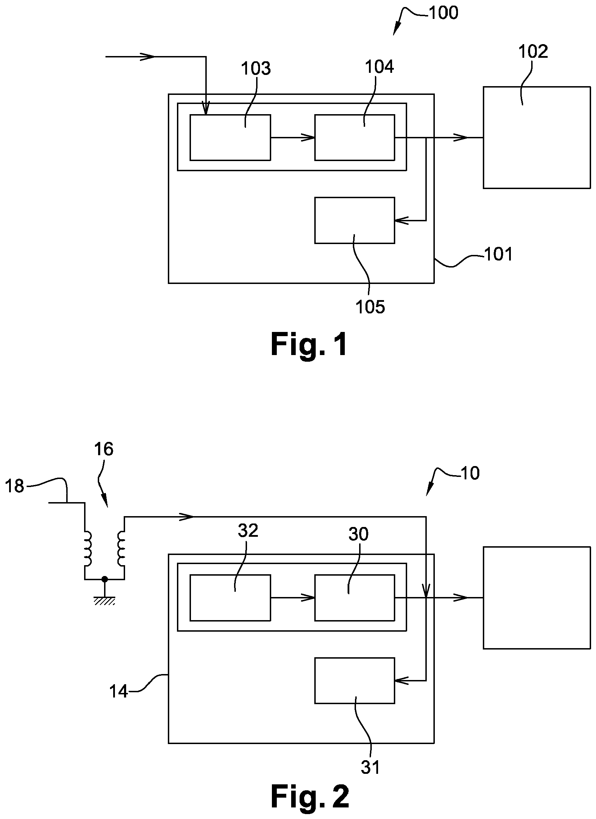

Les unités de pilotage existantes 100 sont par exemple telles que représentées sur la figure 1. Elles comprennent un circuit logique 101 contrôlant un ensemble de circuits de pilotage 102 destinés à piloter les relais électriques du moteur de direction assistée. Le circuit logique 101 est alimenté directement par la batterie du véhicule automobile. Le circuit logique 101 comprend une unité de contrôle interne 105, une pompe de charge 103, et un régulateur interne 104, la pompe de charge 103 fournissant une tension de 16 volts au régulateur interne 104 qui alimente les circuits de pilotage 102. Au-delà de 16 volts, la pompe de charge 103 est arrêtée et le régulateur 104 voit directement sur son entrée la tension de la batterie du véhicule.

Ce type de montage présente plusieurs inconvénients.

Parmi les inconvénients des unités de pilotage actuelles, on peut citer le fait que la pompe de charge et le régulateur interne induisent des pertes. Ces pertes, dûes à la chute de tension entre l'entrée de la pompe de charge 103 et la sortie du régulateur 104 qui peut être estimée à environ 4 volts, représentent, en considérant pour les circuits de pilotage un courant d'environ 60mA, une puissance de l'ordre de 240 mW. Ainsi, il y a un échauffement important dû aux pertes induites par la pompe de charge 103 et le régulateur interne 104.

Par ailleurs, il existe également un courant de fuite d'environ 101.IA dû au fait que l'unité de pilotage 100 est directement branchée à la batterie du véhicule. Ces 10 jaA représentent à eux seuls 10% de la consommation d'un véhicule lorsqu'il est garé. De plus, l'unité de pilotage étant directement branchée à la batterie, il est nécessaire de prévoir un dispositif de protection en cas d'inversion de la batterie du véhicule.

Ainsi, il existe un besoin pour une unité de pilotage ne présentant pas les inconvénients des unités de pilotage existantes.

L'invention a pour but, entre autre, de répondre à ce besoin et y parvient au moyen d'une unité de pilotage d'un moteur de direction assistée d'un véhicule automobile, comprenant :
- une pluralité de circuits de pilotage destinés à piloter les relais électriques du moteur de direction assistée,
- un circuit logique contrôlant les différents circuits de pilotage,
l'unité de pilotage comprenant en outre un convertisseur de tension ayant une isolation galvanique, le convertisseur de tension alimentant le circuit logique et les circuits de pilotage, et étant destiné à être relié à une batterie d'alimentation électrique.

Avantageusement, l'utilisation d'un convertisseur de tension ayant une isolation galvanique, par exemple un convertisseur de tension de type flyback, permet de s'affranchir de la pompe de charge et ainsi de limiter les inconvénients liés à cette pompe de charge. De plus, le convertisseur de tension de type flyback permet de faire fonctionner l'unité de pilotage sur une gamme de tension plus importante, typiquement de 3 volts à 36 volts.

L'unité de pilotage selon l'invention peut également comprendre une ou plusieurs des caractéristiques ci-dessous, considérées individuellement ou selon toutes les combinaisons techniquement possibles :
- le convertisseur de tension comprend :
   - un circuit primaire ayant une entrée primaire, un enroulement primaire et un interrupteur commandable primaire, l'interrupteur étant notamment bidirectionnel en courant,
   - au moins un circuit secondaire ayant une sortie secondaire, un enroulement secondaire couplé magnétiquement avec l'enroulement primaire ; et/ou
- l'interrupteur commandable primaire est monté en série avec l'enroulement primaire ; et/ou
- le circuit primaire du convertisseur de tension comprend en outre un shunt monté en série avec l'enroulement primaire ; et/ou
- le circuit primaire du convertisseur de tension comprend en outre un condensateur primaire monté en parallèle de l'association en série de l'enroulement primaire, de l'interrupteur commandable primaire et du shunt ; et/ou
- l'entrée primaire du convertisseur de tension est destinée à être reliée à une batterie d'alimentation électrique ; et/ou
- le circuit secondaire du convertisseur de tension comprend en outre une diode secondaire montée en série avec l'enroulement secondaire ; et/ou
- le circuit secondaire du convertisseur de tension comprend en outre un interrupteur commandable secondaire, notamment un interrupteur bidirectionnel en courant, monté en série avec l'enroulement secondaire ; et/ou
- le circuit secondaire du convertisseur de tension comprend en outre un condensateur secondaire monté en parallèle de l'association en série de l'enroulement secondaire, de la diode secondaire et de l'interrupteur commandable secondaire ; et/ou
- le convertisseur de tension alimente le circuit logique et les circuits de pilotage à partir de la tension à la sortie de l'interrupteur commandable secondaire, et/ou
- la sortie secondaire du circuit secondaire du convertisseur de tension est reliée au circuit logique. On peut notamment permettre le contrôle de ce circuit secondaire par l'unité de contrôle interne du circuit logique, de sorte que ce contrôle ne nécessite pas l'ajout d'un composant dédié.

L'invention se rapporte également à un moteur de direction assistée d'un véhicule automobile comprenant une unité de pilotage selon l'invention.

L'invention sera mieux comprise à la lecture de la description qui va suivre donnée à titre d'exemple non limitatif de mise en oeuvre de celle-ci, et examen du dessin annexé sur lequel :
- la figure 1 représente de façon schématique une unité de pilotage selon l'art antérieur,
- les figures 2 et 3 représentent de façon schématique une unité de pilotage selon l'invention, la figure 2 permettant une comparaison avec la figure 1, et
- la figure 4 représente de façon schématique un exemple de convertisseur de tension pouvant être utilisé dans une unité de pilotage selon l'invention.

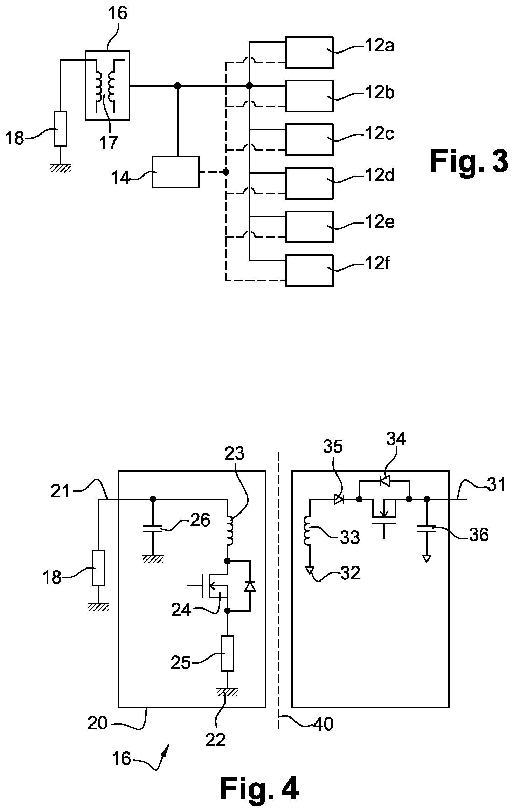

On a représenté sur les figures 2 et 3 une unité de pilotage 10 permettant de piloter un moteur de direction assistée d'un véhicule automobile. Comme représenté sur la figure 3 l'unité de pilotage 10 comprend une pluralité de circuits de pilotage 12a, 12b, 12c, 12d, 12e, 12f, un circuit logique 14 et un convertisseur de tension 16. La pluralité de circuits de pilotage 12a à 12f peut être réalisée à l'aide d'un composant unique, ce dernier étant représenté sur la figure 2.

Le circuit logique 14 comprend une unité de contrôle interne 31.

Les circuits de pilotage 12a, 12b, 12c, 12d, 12e, 12f sont destinés à piloter les relais électriques d'un moteur de direction assistée d'un véhicule automobile. Les différents circuits de pilotage sont contrôlés au moyen du circuit logique 14.

Le convertisseur de tension 16 est destiné à être relié à une batterie d'alimentation électrique 18, par exemple la batterie de véhicule automobile, afin d'alimenter le circuit logique 14 d'une part, et 12a, 12b, 12c, 12d, 12e ,12f d'autre part.

Selon l'invention, le convertisseur de tension 16 comprend une isolation galvanique 17.

Il existe une pluralité d'avantages à alimenter les circuits de pilotage et le circuit logique au moyen d'un convertisseur de tension ayant une isolation galvanique.

Une telle configuration permet de réduire les pertes et donc l'échauffement dans le composant sans avoir recours à une pompe de charge et à un régulateur interne. Ces deux fonctions étant réalisées par le convertisseur de tension. La présence sur la figure 2 d'une pompe de charge 32 et d'un régulateur interne 30 est liée au fait que l'on utilise dans l'exemple considéré, pour réaliser le circuit logique 14, un circuit logique standard.

Une telle configuration permet en outre d'éliminer les courants de fuite. En effet, les circuits de pilotage 12a à 12f n'étant plus par reliés directement à la batterie alimentation 18 mais étant isolés de cette batterie d'alimentation par l'isolation galvanique 17, le montage permet d'éliminer les courants de fuite au niveau des circuits de pilotage 12a, 12b, 12c, 12d, 12e, 12f.

La présence de l'isolation galvanique 17 permet également de s'affranchir des risques liés à une inversion de polarisation au niveau de la batterie.

Plus généralement, la présence de l'isolation galvanique 17 permet de s'affranchir des risques liés à une instabilité de batterie d'alimentation 18. En particulier, l'isolation galvanique permet de protéger les circuits de pilotage 12a, 12b, 12c, 12d, 12e ,12f et le circuit logique 14 des risques de surtensions, ainsi que des risques de sous-tension ou de décharge électrostatique.

Avantageusement, selon un mode de réalisation de l'invention, le convertisseur de tension 16 est placé à distance des circuits de pilotage 12a, 12b, 12c, 12d, 12e, 12f et du circuit logique 14, réduisant ainsi les transferts thermique entre le convertisseur de tension et les circuits de pilotage 12a, 12b, 12c, 12d, 12e, 12f et/ou le circuit logique 14. On évite par là même de créer un point chaud.

On a représenté sur la figure 4, un convertisseur de tension 16 selon un exemple de mise en oeuvre de l'invention. Le convertisseur de tension 16 est de type flyback, comprenant un circuit primaire 20 et un circuit secondaire 30.

Le circuit primaire 20 présente une entrée primaire 21 reliée sur la figure 2 à une batterie d'alimentation électrique 18. La batterie d'alimentation électrique 18 est de préférence une batterie d'alimentation électrique d'un véhicule automobile délivrant une tension comprise entre 3 V et 36 V.

Le circuit secondaire 30 présente une sortie secondaire 31 destinée à alimenter le circuit logique 14 et les circuits de pilotage 12a, 12b, 12c, 12d, 12e, 12f de l'unité de pilotage. Dans l'exemple considéré, la tension au niveau de la sortie secondaire 31 est d'environ 12 V.

Le circuit primaire 20 est référencé sur une masse 22 et comprend un enroulement primaire 23 monté en série avec un interrupteur commandable primaire 24. Dans l'exemple considéré, l'enroulement primaire 23 et l'interrupteur commandable primaire 24 sont montées en série avec un shunt 25 permettant de mesurer le courant circulant dans l'interrupteur commandable primaire 24. L'interrupteur commandable primaire 24 est dans cet exemple un transistor à effet de champ.

Un condensateur 26 est monté en parallèle de l'association en série de l'enroulement primaire 23, de l'interrupteur commandable primaire 24 et du shunt 25.

Le circuit secondaire 30 est référencé sur une masse 32 distincte de la masse 22. La masse 22 est isolée de la masse 32 par une barrière d'isolation 40. La barrière d'isolation 40 présente par exemple une tension de barrière de l'ordre de 3 kV.

Le circuit secondaire 30 comprend dans l'exemple considéré un enroulement secondaire 33 couplé magnétiquement avec l'enroulement primaire 23 du circuit primaire 20. L'enroulement primaire 33 est monté en série avec un interrupteur commandable secondaire 34. L'interrupteur commandable secondaire 34 est dans cet exemple un transistor à effet de champ.

Avantageusement, l'interrupteur commandable secondaire 34 permet de réaliser un diagnostic du bon fonctionnement de l'unité de pilotage préalablement à son utilisation pour piloter les relais électriques du moteur de direction assistée.

Comme représenté sur la figure 4, le circuit secondaire 30 comprend également une diode secondaire 35 montée en série de l'enroulement secondaire 33.

Un condensateur 36 est monté en parallèle de l'association en série de l'enroulement secondaire 36, la diode 34 et de l'interrupteur commandable secondaire 34.

La sortie secondaire 31 du circuit secondaire 30 est reliée au circuit logique 14 et aux circuits de pilotage 12a, 12b, 12c, 12d, 12e, 12f de sorte à les alimenter.

L'expression « comprenant un » doit être comprise comme synonyme de l'expression « comprenant au moins un », sauf lorsque le contraire est spécifié.

## Revendications

1. Unité de pilotage (10) d'un moteur de direction assistée d'un véhicule automobile, comprenant :
- une pluralité de circuits de pilotage (12a, 12b, 12c, 12d, 12e ,12f) destinés à piloter les relais électriques du moteur de direction assistée,
- un circuit logique (14) contrôlant les différents circuits de pilotage,
**caractérisée en ce que** l'unité de pilotage (10) comprend en outre un convertisseur de tension (16) ayant une isolation galvanique (17), le convertisseur de tension (16) alimentant le circuit logique et les circuits de pilotage, et étant destiné à être relié à une batterie d'alimentation électrique (18).

2. Unité de pilotage selon la revendication 1, dans laquelle le convertisseur de tension (16) comprend :
- un circuit primaire (20) ayant une entrée primaire (21), un enroulement primaire (23) et un interrupteur commandable primaire (24),
- un circuit secondaire(30) ayant une sortie secondaire (31), et un enroulement secondaire (33) couplé magnétiquement avec l'enroulement primaire (23).

3. Unité de pilotage selon la revendication 2, dans laquelle l'interrupteur commandable primaire (24) est monté en série avec l'enroulement primaire (23).

4. Unité de pilotage selon l'une des revendications 2 ou 3, dans laquelle le circuit primaire du convertisseur de tension comprend en outre un shunt (25) monté en série avec l'enroulement primaire (23).

5. Unité de pilotage selon les revendications 3 et 4, dans laquelle le circuit primaire du convertisseur de tension comprend en outre un condensateur primaire (26) monté en parallèle de l'association en série de l'enroulement primaire (23), de l'interrupteur commandable primaire (24) et du shunt (25).

6. Unité de pilotage selon l'une des revendications 2 à 5, dans laquelle l'entrée primaire (21) du convertisseur de tension est destinée à être reliée à une batterie d'alimentation électrique (18).

7. Unité de pilotage selon l'une des revendications 2 à 6, dans laquelle le circuit secondaire (30) du convertisseur de tension (16) comprend en outre une diode secondaire (35) montée en série de l'enroulement secondaire (33).

8. Unité de pilotage selon la revendication 7, dans laquelle le circuit secondaire (30) du convertisseur de tension comprend en outre un interrupteur commandable secondaire (34) monté en série avec l'enroulement secondaire (33).

9. Unité de pilotage selon la revendication 8, dans laquelle le circuit secondaire (30) du convertisseur de tension comprend en outre un condensateur secondaire (36) monté en parallèle de l'association en série de l'enroulement secondaire (33), de la diode secondaire (35) et de l'interrupteur commandable secondaire (34).

10. Unité de pilotage selon la revendication 9, dans laquelle le convertisseur de tension alimente le circuit logique (14) et les circuits de pilotage (12a, 12b, 12c, 12d, 12e, 12f) à partir de la tension à la sortie de l'interrupteur commandable secondaire (34).

11. Moteur de direction assistée d'un véhicule automobile comprenant une unité de pilotage (10) selon l'une des revendications précédentes.

## Patentansprüche

1. Steuerungseinheit (10) eines Servomotors eines Kraftfahrzeugs, umfassend:
- mehrere Steuerschaltungen (12a, 12b, 12c, 12d, 12e, 12f), die dazu bestimmt sind, die elektrischen Relais des Servomotors zu steuern,
- eine Logikschaltung (14), die die verschiedenen Steuerschaltungen kontrolliert,
**dadurch gekennzeichnet, dass** die Steuerungseinheit (10) ferner einen Spannungswandler (16) mit einer galvanischen Trennung (17) aufweist, wobei der Spannungswandler (16) die Logikschaltung und die Steuerschaltungen speist und dazu bestimmt ist, an eine Stromversorgungsbatterie (18) angeschlossen zu werden.

2. Steuerungseinheit nach Anspruch 1, wobei der Spannungswandler (16) Folgendes aufweist:
- einen Primärkreis (20) mit einem Primäreingang (21), einer Primärwicklung (23) und einem steuerbaren Primärschalter (24),
- einen Sekundärkreis (30) mit einem Sekundärausgang (31) und einer Sekundärwicklung (33), die magnetisch mit der Primärwicklung (23) gekoppelt ist.

3. Steuerungseinheit nach Anspruch 2, wobei der steuerbare Primärschalter (24) mit der Primärwicklung (23) in Reihe geschaltet ist.

4. Steuerungseinheit nach einem der Ansprüche 2 oder 3, wobei der Primärkreis des Spannungswandlers ferner einen Shunt (25) aufweist, der mit der Primärwicklung (23) in Reihe geschaltet ist.

5. Steuerungseinheit nach einem der Ansprüche 3 und 4, wobei der Primärkreis des Spannungswandlers ferner einen Primärkondensator (26) aufweist, der parallel zu der Reihenschaltung der Primärwicklung (23), des steuerbaren Primärschalters (24) und des Shunts (25) geschaltet ist.

6. Steuerungseinheit nach einem der Ansprüche 2 bis 5, wobei der Primäreingang (21) des Spannungswandlers dazu bestimmt ist, an eine Stromversorgungsbatterie (18) angeschlossen zu werden.

7. Steuerungseinheit nach einem der Ansprüche 2 bis 6, wobei der Sekundärkreis (30) des Spannungswandlers (16) ferner eine Sekundärdiode (35) aufweist, die mit der Sekundärwicklung (33) in Reihe geschaltet ist.

8. Steuerungseinheit nach Anspruch 7, wobei der Sekundärkreis (30) des Spannungswandlers ferner einen steuerbaren Sekundärschalter (34) aufweist, der mit der Sekundärwicklung (33) in Reihe geschaltet ist.

9. Steuerungseinheit nach Anspruch 8, wobei der Sekundärkreis (30) des Spannungswandlers ferner einen Sekundärkondensator (36) aufweist, der parallel zu der Reihenschaltung der Sekundärwicklung (33), der Sekundärdiode (35) und des steuerbaren Sekundärschalters (34) geschaltet ist.

10. Steuerungseinheit nach Anspruch 9, wobei der Spannungswandler die Logikschaltung (14) und die Steuerschaltungen (12a, 12b, 12c, 12d, 12e, 12f) aus der Spannung am Ausgang des steuerbaren Sekundärschalters (34) speist.

11. Servomotor eines Kraftfahrzeugs, umfassend eine Steuerungseinheit (10) nach einem der vorhergehenden Ansprüche.

## Claims

1. Control unit (10) for controlling a power-steering motor of a motor vehicle, comprising:
- a plurality of control circuits (12a, 12b, 12c, 12d, 12e, 12f) intended to control the electric relays of the power-steering motor,
- a logic circuit (14) controlling the various control circuits,
**characterized in that** the control unit (10) additionally comprises a voltage converter (16) having a galvanic isolation (17), the voltage converter (16) supplying the logic circuit and the control circuits, and being intended to be connected to an electric supply battery (18).

2. Control unit according to Claim 1, in which the voltage converter (16) comprises:
- a primary circuit (20) having a primary input (21), a primary winding (23) and a primary controllable switch (24),
- a secondary circuit (30) having a secondary output (31), and a secondary winding (33) coupled magnetically with the primary winding (23) .

3. Control unit according to Claim 2, in which the primary controllable switch (24) is mounted in series with the primary winding (23).

4. Control unit according to either of Claims 2 and 3, in which the primary circuit of the voltage converter additionally comprises a shunt (25) mounted in series with the primary winding (23).

5. Control unit according to Claims 3 and 4, in which the primary circuit of the voltage converter additionally comprises a primary capacitor (26) mounted in parallel with the series association of the primary winding (23), the primary controllable switch (24) and the shunt (25).

6. Control unit according to one of Claims 2 to 5, in which the primary input (21) of the voltage converter is intended to be connected to an electric supply battery (18).

7. Control unit according to one of Claims 2 to 6, in which the secondary circuit (30) of the voltage converter (16) additionally comprises a secondary diode (35) mounted in series with the secondary winding (33).

8. Control unit according to Claim 7, in which the secondary circuit (30) of the voltage converter additionally comprises a secondary controllable switch (34) mounted in series with the secondary winding (33).

9. Control unit according to Claim 8, in which the secondary circuit (30) of the voltage converter additionally comprises a secondary capacitor (36) mounted in parallel with the series association of the secondary winding (33), the secondary diode (35) and the secondary controllable switch (34).

10. Control unit according to Claim 9, in which the voltage converter supplies the logic circuit (14) and the control circuits (12a, 12b, 12c, 12d, 12e, 12f) from the voltage at the output of the secondary controllable switch (34).

11. Power-steering motor of a motor vehicle comprising a control unit (10) according to one of the preceding claims.
